# EUROPÄISCHE PATENTANMELDUNG

(11) **EP 4 686 904 A1**
(43) Veröffentlichungstag der Anmeldung: **04.02.2026**
(21) Anmeldenummer: 24020250.7
(22) Anmeldetag: 31.07.2024
(51) Int. Cl.: F41B 7/00, F41B 7/08

(54) **ABSCHUSSVORRICHTUNG**

(71) Anmelder: Eritho GmbH, 83122 Samerberg (DE)
(72) Erfinder: Pandorf, Thomas, 83122 Samerberg (DE)
(74) Vertreter: Fehrenbacher, Eckhard Anton

(57) **Zusammenfassung**

Es ist eine Vorrichtung (100) angegeben, aufweisend ein Gehäuse (15) mit einem ersten Bereich (28), indem ein Auslösemechanismus (110) mit einem Abzug (1) und einem Spannhebel (2) drehend gelagert ist, mit einem zweiten Bereich (29) in dem ein Geschoss (30) und ein Federelement (3) in einem Lauf (27) längsbeweglich angeordnet sind, wobei durch das Einführen des Geschosses (30) das Federelement (3) gespannt und der Auslösemechanismus (110) aktiviert und durch das Betätigen des im aktivierten Zustand befindlichen Abzugs (1) der Auslösemechanismus (110) freigegeben wird, wodurch sich das Federelement (3) entspannt und dadurch das Geschoss (30) beschleunigt und angeschossen wird.

## Beschreibung

Die Erfindung bezieht sich auf einen Auslösemechanismus zur Verwendung in einer Vorrichtung, insbesondere einer Abschussvorrichtung zur Bekämpfung von Moskitos, Mücken und Fliegen, nachfolgend Insekten genannt, aus der Ferne ohne Verwendung von Elektrizität oder Fluiden, insbesondere Chemikalien.

Für die Bekämpfung von Insekten, die die Fähigkeit haben zu beißen oder zu stechen und die beim Fliegen störende Geräusche verursachen, sind zahlreiche Methoden und Geräte entwickelt worden. Traditionelle Mittel zur Tötung von Insekten, die beispielsweise an einer Wand sitzen, sind Geräte wie Fliegenklatschen und ihre Äquivalente oder chemische Sprays. Die Benutzung von Ersteren erfordert die Annäherung zum Flugobjekt in Verbindung mit einer gewissen Geschicklichkeit und Agilität. Sehr oft nehmen die Flugobjekte die Annäherung wahr und entfernen sich rechtzeitig aus dem Gefahrenbereich. Chemische Sprays hinterlassen ungewünschte, teilweise geruchsbehaftete oder umweltbelastende oder gesundheitsgefährdende Rückstände in dem Bereich, in dem sie eingesetzt werden.

Die vorliegende Erfindung löst diese Probleme und bietet denjenigen, die mit der Beseitigung von Insekten betraut sind, Unterhaltung in Form einer Pistole, die auf störende Insekten schießt.

Ein Gerät, das für die Beseitigung von Insekten entwickelt wurde, ist beispielsweise die US 1,611,533. Durch eine aufwendige mechanische Vorrichtung, bestehend aus mehreren Federelementen und um Achsen drehbar gelagerte Hebel, wird ein Mechanismus offenbart, mit dem ein Kolben betätigt wird. Durch die Bewegung des Kolbens wird ein Projektil, bestehend aus einer kleinen Menge an Flüssigkeit, aus dem Lauf des Geräts befördert.

Die US 468,089A offenbart eine Spielzeugpistole bestehend aus einem Pistolenlauf und einem Pistolenschaft. Durch eine im Pistolenlauf mechanisch befestigte Feder kann ein Pfeil abgeschossen werden. Dazu wird ein federgelagerter Abzug betätigt.

Die WO 2014/204520 offenbart einen verbesserten Auslösemechanismus für Schusswaffen, deren Betriebsart auf den sicheren bzw. halbautomatischen Modus beschränkt ist. Mittels Federkraft wird ein Rückstellhebel unter Spannung und in geschlossener Position gehalten. Dadurch wird verhindert, dass der Hammer auf den Abzugskörper und den Unterbrecher trifft, wodurch die Sicherheit des Abzugs erhöht wird.

Die US 2014/0311007 offenbart einen alternativen Schusswaffen-Abzugsmechanismus, mittels dem wiederholbare Leistungen erzielt werden können. Der Abzugsmechanismus umfasst eine zumindest teilweise im Gehäuse angeordnete Feder. Der Abzug wird aktiviert, wenn die gespannte Feder gelöst wird.

Die WP 2009/065161 offenbart einen verbesserten Abzugsmechanismus einer Handfeuerwaffe. Dabei wird vorgeschlagen, dass die Bauteile, die die Auslösebewegung herbeiführen, nur über ein Drehteil, insbesondere eine Rolle in Wirkverbindung stehen. Dadurch wird das Auftreten von Gleitwirkung vollständig vermieden, wodurch der Abzugswiderstand verringert und dadurch der Abzugsmechanismus verbessert wird. Die Auslösung des Abschussmechanismus erfolgt mittels einem unter Federkraft gelagertem Auslöseplättchen.

Die US 2012/017833 offenbart eine Spielzeugpistole, die sowohl über eine Wasserspritz- als auch eine Projektilabschussfunktion verfügt. Der Projektilabschussmechanismus umfasst einen Spannhammer, der unter Einwirkung einer Feder bewegt wird, um einen Druck in einem Zylinder zu erhöhen. Durch Freigabe der Druckluft, kann ein Projektil abgefeuert werden.

Die DE102004058986 offenbart einen verbesserten Abzugsmechanismus, bei dem die Bauteile wie beispielsweise der Abzug und die Abzugsstange über einen Gelenkhebel und Rastelemente verbunden sind. Die Bauteile weisen geneigte Anlageflächen auf, wobei durch Änderung des Neigungswinkels der Abzugswiderstand einfach verändert werden kann. (federgelagerter Abzug)

Die WO86/00399 offenbart einen Abzugsmontagemechanismus, bei dem der Abzug drehbar um Abzugsnockenabschnitte montiert ist und eine Federvorspannvorrichtung den Abzug und die zugehörige Abzugsstange gegen den Schlitten drückt.

Aus der DE 3235918 ist ein Abzugsmechanismus für eine Pistole ersichtlich. Der Abzugsmechanismus weist einen Verriegelungs- und Sperrmechanismus mit einem Kupplungsstück, einem Sperrhebel und einem Zwischenhebel auf und ist durch einen Auslösehebel aktivierbar. Kupplungsstück, Sperrhebel und Auslösehebel sind durch Federkraft positioniert, wodurch ihre Funktionssicherheit gewährleistet wird.

Aus dem Stand der Technik sind Abzugsmechanismen bekannt, bei denen, um deren Funktionalität zu gewährleisten, mehrere teilweise komplexe Teile einschließlich Federn erforderlich sind.

Es ist Aufgabe der Erfindung einen einfachen Auslösemechanismus bereit zu stellen, der kostengünstig herzustellen ist. Zusätzlich ist es Aufgabe der Erfindung, eine Vorrichtung mit einem erfindungsgemäßen Auslösemechanismus bereitzustellen.

Ein erfindungsgemäßer Auslösemechanismus umfasst ausschließlich zwei Teile, einen Abzug und einen Spannhebel, die beide drehend gelagert sind. Weitere Teile sind nicht erforderlich. Die Funktionalität des Auslösemechanismus wird ausschließlich durch die Anordnung des Abzugs und des Spannhebels zueinander und den formgebenden Mittel gewährleistet, die zum einen am Abzug und zum anderen am Spannhebel ausgebildet sind. Der Abstand zwischen dem um eine Achse radial angeordneten Abzug und dem um eine Achse radial angeordneten Spannhebel ist so bestimmt, dass die formgebenden Mittel des Abzugs und des Spannhebels in Wirkverbindung stehen, wodurch die Funktionalität des Abzugs sichergestellt ist. Teile, die mittels Federkraft bewegt beziehungsweise gespannt werden, sind im erfindungsgemäßen Auslösemechanismus nicht enthalten.

Der Auslösemechanismus kann drei verschiedene Stellungen einnehmen. Eine erste entspannte Stellung, vor der Aktivierung des Auslösemechanismus. Eine zweite maximal gespannte Stellung, in der der Auslösemechanismus sich in seiner maximal gedrehten Position befindet und eine dritte Aktivierungsstellung, in der der Auslösemechanismus aktiviert ist.

Der Abzug in Form eines flächenhaft ausgebildeten Aktivierungsteils ist an einem Drehpunkt radial beweglich gelagert und weist eine erste teilweise konvex und eine zweite teilweise konkav ausgebildete Stirnfläche auf. Der konvexe und der konkav ausgebildet Teil der Stirnflächen sind über einen abgerundeten Bereich miteinander verbunden. Gegenüber diesem abgerundeten Bereich weist der Abzug einen Anschlag in Form einer Ecke auf.

Der flächenhaft ausgebildete Spannhebel, der im Wesentlichen einer rechteckigen Form entspricht, ist an einem Drehpunkt radial beweglich gelagert und umfasst einen ersten, einen zweiten und einen dritten Anschlag, sowie einen Nocken. Der erste Anschlag ist in einem Endbereich einer ersten Stirnfläche angeordnet. Der zweite Anschlag ist an derselben Stirnfläche in einem Abstand zum ersten Anschlag angeordnet. Der Abstand des ersten und des zweiten Anschlags bestimmt den Weg zwischen der zweiten maximal gespannten Stellung und der dritten Aktivierungsstellung des Auslösemechanismus und somit den Drehbereich des Spannhebels zwischen diesen beiden Stellungen.

Der dritte Anschlag und der Nocken sind an einer zweiten Stirnfläche der Spannhebels angeordnet. Der dritte Anschlag ist im Eckbereich angeordnet, in dem die erste Stirnfläche in die zweite Stirnfläche übergeht. Der Nocken ist im gegenüberliegendem Eckbereich der zweiten Stirnfläche des Spannhebels angeordnet.

Die Übergänge der Anschläge in die Seitenflächen sind vorzugsweise so ausgebildet, dass das Entstehen von Bruchstellen verhindert wird und die Anschläge somit den Belastungen standhalten. Dies wird erreicht, in dem die Übergänge durch schräge Phasen beziehungsweise Radien gebildet werden.

In der dritten Stellung, der Aktivierungsstellung des Auslösemechanismus, hintergreift die Ecke des Abzugs den dritten Anschlag des Spannhebels und hält den Auslösemechanismus in Position. Der Abzug befindet sich in seiner Aktivierungsposition. In der Aktivierungsposition ist der Abzug in einer gespannten Position. Um den Auslösemechanismus auszulösen, wird der Abzug durch eine Betätigung, beispielsweise eines Fingers eines Benutzers, bewegt und dabei in , eine entspannte Position überführt. Dabei bewegt sich die Ecke des Abzugs weg vom dritten Anschlag des Spannhebels, wodurch der Auslösemechanismus ausgelöst wird.

Die im Folgenden angegebenen Drehrichtungen (im Uhrzeigersinn, bzw. gegen den Uhrzeigersinn) bezieht sich auf die Draufsicht des Auslösemechanismus, indem der Abzug links vom Spannhebel angeordnet ist. Grundsätzlich handelt es sich um Drehrichtungen im Allgemeinen. Die Angabe der Drehrichtung im Uhrzeigersinn bzw. gegen den Uhrzeigersinn wird nur beispielhaft angegeben und könnte je nach Betrachtungsweise genau entgegengesetzt sein.

Bei der Überführung des Spannhebels von der entspannten Stellung in die maximal gespannte Stellung dreht sich der Spannhebel. Die Drehung erfolgt im Uhrzeigersinn in einem Winkelbereich von 25 bis 45°, vorzugsweise 37,8° Dabei berührt der Nocken des Spannhebels die Seitenfläche des Abzugs, wodurch dieser im Uhrzeigersinn in eine gespannte Position gedreht wird. Die Drehung des Spannhebels und des Abzugs bewirkt, dass die Ecke des Abzugs in den Bereich nahe der zweiten Stirnfläche unterhalb des dritten Anschlags des Spannhebels überführt wird. In einer bestimmten Ausführungsform kann in der gespannten Position die Ecke des Abzugs die zweite Seitenfläche des Spannhebels berühren. Zusätzlich bewirkt die Drehung des Spannhebels im Uhrzeigersinn, dass sich die Position der äußersten Kante beziehungsweise der äußersten Eckes des zweiten Anschlags, in Bezug auf eine horizontale Ebene verändert, die im 90° Winkel zur Seitenfläche des Spannhebels verläuft. Der Abstand des äußersten Eckes zu der horizontalen Ebene wird größer.

Im weiteren Verlauf, wenn der Auslösemechanismus von der zweiten, maximalen Stellung in die Aktivierungsstellung überführt wird, dabei sich der Spannhebel gegen den Uhrzeigersinn in einem Winkelbereich von 15° bis 25°, vorzugsweise 19,4° bewegt, hintergreift die Ecke des Abzugs den dritten Anschlag des Spannhebels und hält den Auslösemechanismus in der Aktivierungsstellung.

Erfindungsgemäß drehen sich der Abzug und der Spannhebel immer in dieselbe Richtung und dies unabhängig von der Überführung des Auslösemechanismus von der ersten Stellung in die zweite Stellung oder von der zweiten Stellung in die dritte Stellung oder von der dritten Stellung in die erste Stellung.

Da der erste, der zweite und der dritte Anschlag sowie der Nocken außerhalb des Drehzentrum des Spannhebels angeordnet sind bewirkt die Drehung des Spannhebels, dass sich die Position der vorgenannten verändert. Dadurch wird deren formgebundene Wirkung verändert. Diese wird im Folgenden beschrieben.

Ein erfindungsgemäßer Auslösemechanismus umfasst
- einen flächenhaft ausgebildeten drehend gelagerten Abzug, der eine konvex und eine konkav ausgebildete Stirnfläche aufweist, die über einen gerundeten Bereich miteinander verbunden sind und gegenüber dem gerundeten Bereich eine Ecke aufweist, und
- einen flächenhaft ausgebildete Spannhebel, der im Wesentlichen eine rechteckige Form aufweist, und an einem Drehpunkt radial beweglich gelagert ist, wobei der Spannhebel einen ersten, einen zweiten und einen dritten Anschlag, sowie einen Nocken aufweist, wobei
der Abzug und der Spannhebel in einem Abstand zueinander angeordnet sind, sodass bei der Überführung des Auslösemechanismus von einer ersten Stellung in eine zweite Stellung der Spannhebel sich in einem Winkelbereich von 25 bis 45°, vorzugsweise 37,8° dreht und wobei der Nocken des Spannhebels mit der Stirnfläche des Abzugs in Wirkverbindung steht, wodurch die Ecke des Abzugs in den Bereich unterhalb des dritten Anschlags nahe der zweiten Stirnfläche des Spannhebels überführt wird und wobei bei der Überführung von der zweiten Stellung in die dritte Stellung der Spannhebel sich in einem Winkelbereich von 15° bis 25°, vorzugsweise 19,4°° dreht, bis die Ecke des Abzugs den dritten Anschlag hintergreift, wobei der Spannhebel, von der zweiten in die dritte Stellung, entgegen der Richtung der Drehung des Spannhebels von der ersten in die zweite Stellung dreht.

Eine erfindungsgemäße Vorrichtung umfasst einen Auslösemechanismus, der in einem Gehäuse angeordnet ist. Dabei ist das Gehäuse aus zwei Gehäusehälften gebildet, die aus Kunststoff geformt und formschlüssig und/oder stoffschlüssig zusammengefügt sein können. Das Gehäuse der Vorrichtung umfasst zwei Bereiche. Einen ersten Bereich, in dem der Auslösemechanismus angeordnet ist und einen zweiten Bereich in dem ein Geschoss angeordnet ist. Der zweite Bereich ist in Form eines in Längsrichtung ausgebildeten Laufs gestaltet. Im Lauf des Gehäuses ist ein Führungsabschnitt angeordnet, in dem an einem ersten Ende ein Geschoss und an einem zweiten Ende ein Federmittel angeordnet ist. Der im Gehäuse angeordnete Führungsabschnitt, der im Wesentlichen dem Lauf entspricht, erstreckt sich von einer ersten Öffnung bis zu einer zweiten Öffnung über die gesamte Länge des Laufs und weist eine Form auf, die es erlaubt, das Geschoss und das Federmittel beweglich in Längsrichtung aufzunehmen. Der Bereich des Führungsabschnitts, in dem das Federelement angeordnet ist, wird in Längsrichtung vom zweiten Ende des Laufs und vom Ende eines Führungsabschnitts, in dem das Geschoss geführt wird, und in Querrichtung von einer Außenwand und von einer Innenwand des Gehäuses begrenzt. Dadurch kann das Federelement sicher im Gehäuse angeordnet sein. Der Bereich des Führungsabschnitts, in dem das Federelement angeordnet ist, ist vorzugsweise größer als die Hälfte des gesamten Führungsabschnitts. Dadurch weist dieser Führungsabschnitt die erforderliche Länge auf, um das Federelement zu spannen und sicher aufzunehmen. Dies ermöglicht es, die gewünschte Spannkraft für die Beschleunigung des Geschosses zu erzeugen.

Der sich von der ersten Öffnung des Laufs in das Gehäuse hinein erstreckende erste Bereich des Führungsanschnitts umfasst Formmittel, die die Führung des Geschosses gewährleisten.

Das Geschoss weist einen in Längsrichtung ausgebildeten Bolzen in Form einer Stange auf, an dem an seinem ersten Ende ein flächenhaft ausgebildetes Element angeordnet ist. Der Bolzen kann vorteilhafterweise einstückig ausgebildet sein. Es kann auch aus zwei oder mehreren Teilen bestehen, die auf bekannte Art und Weise miteinander verbunden sind. Das flächenhaft ausgebildete Element in Form einer Platte kann eine flexible, nachgiebige Beschichtung beispielsweise in Form eines Vlieses oder Schwamms aufweisen. Das flächenhaft ausgebildete Element ist in vorteilhafter Weise stoffschlüssig mittels eines Klebstoffs mit der Platte verbunden. In einem Bereich abgewandt vom flächenhaft ausgebildeten Element, zwischen dem ersten und dem zweiten Ende, weist der Bolzen einen Absatz auf, mit dem das Federmittel gespannt wird und zusätzlich einen Vorsprung, mit dem der Auslösemechanismus der Vorrichtung aktiviert und dadurch in seine Aktivierungsstellung überführt wird. Der Bolzen kann in zwei Bereiche aufgeteilt sein. Dabei erstreckt sich ein erster Bereich vom ersten Ende in Richtung des zweiten Endes bis zum Absatz. Der zweite Bereich erstreckt sich vom Absatz bis zum zweiten Ende. Beide Bereiche können unterschiedliche Abmessungen aufweisen, beispielsweise Durchmesser oder Höhen oder Breiten. Die Abmessungen des zweiten Bereichs sind vorzugsweise geringfügig geringer als der Innendurchmesser des Federelements. Die Abmessungen des ersten Bereichs entsprechen dem Außendurchmesser des Federelements oder können auch größer ausgebildet sein. Der durch den Übergang vom ersten Bereich in den zweiten Bereich entstehende Absatz bildet einen Anschlag für das Federelement. Durch das manuelle Einführen des Geschosses in den Führungsabschnitt wird das Federelement aufgrund des Anschlags gespannt. Beim Spannen des Federmittels greift der Bereich mit den reduzierten Abmessungen des Bolzens in das Federmittel ein, wodurch dieses zusätzlich geführt wird und dadurch der Spannvorgang sicher erfolgen kann. Die Länge des Bereichs mit reduzierten Abmessungen ist kleiner als die Länge des Federelements im entspannten Zustand und größer als die Länge des Federelements im gespannten Zustand. Im gespannten Zustand des Federelements tritt der Bereich mit reduzierten Abmessungen des Bolzens teilweise aus der zweiten Öffnung des Gehäuses aus und überragt dieses.

Der Bolzen des Geschosses kann beispielsweise eine sternförmige Form mit vier Stegen umfassen und im Wesentlichen symmetrisch ausgebildet sein. Bei einer sternförmigen Ausbildung des Bolzens sind die Formmittel des ersten Führungsabschnitts in Form von Wänden ausgebildet, die zwischen einander einen Kanal bilden, in dem ein Steg des Geschosses aufgenommen und geführt wird. Da beide Gehäusehälften im zweiten Bereich symmetrisch ausgebildet sind und somit beide Gehäusehälften Formmittel zur Führung des Geschosses aufweisen, wird dieses sicher geführt.

Die in den Gehäusehälften angeordneten Formmittel zur Führung des Bolzens des Geschosses gewährleisten eine sichere Führung des Geschosses. Wie oben beschrieben bilden diese Formmittel einen Kanal zur Führung eines im Querschnitt sternförmig ausgebildeten Bolzens. Entspricht der Querschnitt des Bolzens alternativ einer zylindrischen Form, sind die Formmittel in Form von Halbschalen ausgebildet. Die Formmittel orientieren sich an der Form des Querschnitts des Bolzens und sind abhängig vom Bolzenquerschnitt so ausgebildet, dass dieser mit Spiel darin beweglich angeordnet sein kann.

Die Form der ersten Öffnung und der zweiten Öffnung in dem zweiten Bereich des Gehäuses sind geringfügig größer als der jeweilige Querschnitt des Bolzens und gewährleisten die Führung des Geschosses. Die Form der ersten Öffnung entspricht im Wesentlichen der Form des Querschnitts des Bolzens im Bereich des flächenhaft ausgebildeten Elements, wobei die Öffnung geringfügig größer als der Querschnitt des Bolzens des Geschosses ausgebildet ist, sodass dieses mit geringem Spiel im Lauf beweglich gelagert sein kann. Zusätzlich umfasst die erste Öffnung einen Bereich, der im Wesentlichen dem Vorsprung am Geschoss entspricht, sodass der Bolzen mit dem Vorsprung in den Lauf eingeführt werden kann. Die Form der zweiten Öffnung entsprich im Wesentlichen dem Querschnitt des Bolzens mit reduzierten Abmessungen, wobei auch die zweite Öffnung geringfügig größer ist als der Bolzen in diesem Bereich. Auch die zweite Öffnung ist so ausgebildet, dass der Bolzen des Geschosses längsbeweglich aufgenommen werden kann und gewährleistet die sichere Führung des Bolzens des Geschosses.

In einer besonderen Ausführungsform kann der Querschnitt des Bolzens des Geschosses asymmetrisch ausgebildet sein. Dadurch ist sichergestellt, dass das Geschoss nur in einer bestimmten Position in den Lauf eingeführt werden kann. Dies hat den Vorteil, dass der Vorsprung immer in der korrekten Position angeordnet ist. Die Öffnungen, die erste und die zweite sind dann auch asymmetrisch ausgebildet und gewährleisten die Längsbeweglichkeit und sichere Führung des Geschosses.

Das Gehäuse weist neben dem zweiten Bereich, in dem der Lauf angeordnet ist, einen ersten Bereich auf, in dem der Auslösemechanismus angeordnet ist. Dieser Auslösemechanismus besteht ausschließlich aus zwei Teilen, einem Abzug und einem Spannhebel. Erfindungsgemäß sind der Abzug und der Spannhebel so ausgebildet und im Abstand zueinander angeordnet, dass die Funktionalität ausschließlich durch formgebende Mittel erfolgt. Die Aktivierung des Auslösemechanismus erfolgt durch ein formgebendes Mittel, einen Vorsprung, der am Geschoß angeordnet ist, und wird im Folgenden beschrieben.

Der zweite Bereich des Gehäuses, in dem der Führungsabschnitt des Laufs angeordnet ist, und der erste Bereich, in dem der Auslösemechanismus angeordnet ist, sind über eine erste Öffnung verbunden. Beim Einführen des Geschosses in den Lauf zum Zwecke des Spannens des Federelements und zur Aktivierung des Auslösemechanismus greift ein am Bolzen des Geschosses angeordneter Vorsprung in den ersten Bereich und kontaktiert einen ersten Anschlag des Spannhebels. Der Kontakt entsteht in ungespannter Stellung des Federelementes. Alternativ kann das Federelement auch teilweise gespannt sein, so dass der Kontakt entsteht, kurz bevor das Federelement komplett gespannt ist.

In der Draufsicht, in der der Abzug links vom Spannhebel, also in Richtung des ersten Endes des Laufs angeordnet ist, führt der Kontakt des Vorsprungs des Geschosses mit dem ersten Anschlag des Spannhebels dazu, dass der Spannhebel, der drehend im Gehäuse gelagert ist, gedreht wird, beispielsweise im Uhrzeigersinn. Der Spannhebel weist einen Nocken auf, der infolge der oben beschriebenen Drehung den Abzug, der drehend im Gehäuse gelagert ist, berührt, diesen gleichsinnig dreht und in seine zweite Position (maximale Spannposition) überführt. Dabei ist der Kontaktbereich des Spannhebels mit dem Abzug so angeordnet, dass der Abzug eine sichere Drehung ausführt. Die Drehung des Spannhebels und des Abzugs sind so aufeinander abgestimmt, dass beim vollständigen Spannen des Federelements eine Ecke des Abzugs in den Bereich unterhalb des dritten Anschlags nahe der zweiten Stirnfläche des Spannhebels überführt wird. Dadurch wird beim Einführen des Geschosses in den zweiten Bereich des Gehäuses durch den Vorsprung am Geschoss der Auslösemechanismus von einer ersten Stellung (entspannte Stellung) in eine zweite Stellung (maximal gespannte Stellung) überführt. Zusätzlich bewirkt die Drehung des Spannhebels, dass sich der Abstand des zweiten Anschlags zum Vorsprung des Geschosses verändert, er wird kleiner. Kann der Vorsprung beim Einführen des Geschosses berührungslos über den zweiten Anschlag des Spannhebels hinweggleiten, ist dies nach der Drehung des Spannhebels und der damit verbundenen Überführung des Auslösemechanismus in die zweite Stellung nicht mehr möglich.

Nachdem der manuelle Spannvorgang, das Einführen des Geschosses beendet ist, das Federelement also komplett gespannt ist, tendiert die gespannte Feder das Geschoss abzuschießen. Dabei wird der Auslösemechanismus von der zweiten Stellung in die dritte Stellung (Aktivierungsstellung) überführt. Dabei dreht sich der Spannhebel, bis die Ecke des Abzugs den dritten Anschlag des Spannhebels hintergreift. Die Drehrichtung von der zweiten Stellung in die dritte Stellung ist entgegengesetzt der Drehrichtung von der ersten Stellung in die zweite Stellung. Der Abzug fixiert in dieser Position den Spannhebel. Die Drehung des Spannhebels von der zweiten Stellung in die dritte Stellung umfasst einen wesentlich kleineren Winkel als die Drehung von der ersten Stellung in die zweite Stellung. Dadurch wird der Abstand des zweiten Anschlags in Bezug auf den Vorsprung etwas vergrößert. Diese Abstandsvergrößerung ist jedoch so geringfügig, dass die in der Aktivierungsstellung eingenommene Position des zweiten Anschlags verhindert, dass der Vorsprung am Bolzen des Geschosses an diesem vorbeigleiten kann. Der Vorsprung am Bolzen des Geschosses schlägt an dem zweiten Anschlag des Spannhebels an. Da der Spannhebel durch die Ecke des Abzugs in seiner Position fixiert ist, wird die Beschleunigung des Geschosses und somit dessen Abschuss verhindert. Die Vorrichtung befindet sich in einem gespannten Zustand, der Auslösemechanismus ist aktiviert. Der Abzug reicht durch eine zweite Öffnung im Gehäuse in einen Aktivierungsbereich. Durch Drücken des Abzugs im Aktivierungsbereich wird die Fixierung des Spannhebels aufgehoben, der Spannhebel dreht sich und gibt den Vorsprung des Bolzens des Geschosses frei. Dadurch entspannt sich das Federelement und das Geschoss wird abgeschossen. Der Aktivierungsbereich weist ein Formmittel in Form eines Anschlags auf, welches im Wesentlichen der konvexen Stirnfläche des Abzugs entspricht und eine Begrenzung für die Drehung des Spannhebels bildet. Das Formmittel kann kongruent zum konvexen Bereich der Stirnfläche des Abzugs ausgebildet sein. Bei der Aktivierung des Auslösemechanismus wird der Abzug bewegt. Dadurch wird der Spannhebel gleichsinnig gedreht, bis er am Anschlag anstößt. Er befindet sich dann in erster Position, in der die Vorrichtung im entspannten Zustand ist.

Durch abermaliges Einführen eines Geschosses in den Lauf des Gehäuses der Vorrichtung kann der Spannvorgang reversibel wiederholt aktiviert werden.

Eine erfindungsgemäße Vorrichtung umfasst
- ein Gehäuse, gebildet aus zwei Gehäusehälften,
- einen im Gehäuse angeordneten ersten Bereich, in dem ein Auslösemechanismus mit einem Abzug und einem Spannhebel angeordnet ist und
- einen im Gehäuse angeordneten zweiten Bereich, in dem sich ein Lauf befindet, der einen Führungsabschnitt umfasst, in dem ein Federelement und ein Geschoss längsbeweglich angeordnet sind, wobei der erste und der zweite Bereich des Gehäuses über eine Öffnung verbunden sind.

Erfindungsgemäß wird ein Verfahren zur Betätigung einer Vorrichtung vorgeschlagen, mit den Schritten
1. Aktivieren des Auslösemechanismus durch das Einführen eines Geschosses in den Lauf im zweiten Bereich des Gehäuses der Vorrichtung, wobei ein Absatz eines Bolzens des Geschosses ein Federelement spannt und zugleich ein Vorsprung des Bolzens des Geschosses durch eine erste Öffnung im Gehäuse den Auslösemechanismus aktiviert und somit die Vorrichtung in einen schussbereiten Zustand überführt und
2. Betätigung des Abzugs, wobei der Auslösemechanismus freigegeben wird und dadurch das Geschoss durch das gespannte Federelement beschleunigt und abgeschossen wird.

Die Lehre der Erfindung kann in verschiedenen Möglichkeiten vorteilhaft ausgestaltet und weitergebildet werden. Dazu wird einerseits auf die nachgeordneten Ansprüche und andererseits auf die nachfolgende Erläuterung eines Ausführungsbespiel einer erfindungsgemäßen Anordnung verwiesen. In den Zeichnungen, die teilweise in vergrößerter Darstellung und nicht maßstäblich dargestellt sind, zeigen die
- Fig. 1: eine perspektivische Ansicht des erfindungsgemäßen Auslösemechanismus in vergrößerter Darstellung,
- Fig. 2: eine Vorderansicht des Abzugs des Auslösemechanismus gemäß Figur 1 in vergrößerter Darstellung,
- Fig. 3a: eine Vorderansicht des Spannhebels des Auslösemechanismus gemäß Figur 1 in vergrößerter Darstellung,
- Fig. 3b: eine Seitenansicht des Spannhebels gemäß Figur 3a
- Fig. 4: eine Vorderansicht des Gehäuses mit dem Auslösemechanismus der erfindungsgemäßen Vorrichtung ohne Federelement und ohne Geschoss im Zustand vor dem Aktivieren des Auslösemechanismus, wobei zur besseren Erkennbarkeit der im Inneren angeordneten Teile eine Gehäusehälfte weggelassen wurde.
- Fig. 5: eine erfindungsgemäße Vorrichtung mit Federelement und einen Teilbereich des Geschosses, im Zustand vor dem Spannen des Federelements.
- Fig. 6: einen Ausschnitt der erfindungsgemäßen Vorrichtung in dem Zustand, kurz bevor das Federelement komplett gespannt ist.
- Fig. 7: eine Vorderansicht des Gehäuses mit dem Auslösemechanismus in der zweiten, maximal gespannten Stellung,
- Fig. 8: einen vergrößerten Ausschnitt der Anordnung des Auslösemechanismus gemäß Figur 7.
- Fig. 9: die Vorrichtung nach Figur 7 mit komplett gespannten Federelement und dem Auslösemechanismus sowie einen Teilbereich des Geschosses,
- Fig. 10: eine Vorderansicht des Gehäuses mit dem Auslösemechanismus, in der Aktivierungsstellung ohne Geschoss und ohne Federelement,
- Fig. 11: einen vergrößerten Ausschnitt der Anordnung des Auslösemechanismus gemäß Figur 10.
- Fig. 12: die Vorrichtung mit dem Auslösemechanismus nach Figur 10 mit gespanntem Federelement und einen Teilbereich des Geschosses.
- Fig. 13: eine Vorderansicht des Geschosses der Vorrichtung
- Fig. 14: einen Querschnitt an der Linie A-A des Geschosses gemäß Figur 13
- Fig. 15: einen Querschnitt an der Linie B-B des Geschosses gemäß Figur 13 und
- Fig. 16: eine Draufsicht der erfindungsgemäßen Vorrichtung mit Federelement und Geschoss mit teilweise gespanntem Federelement, wobei zur besseren Erkennbarkeit des im Inneren angeordneten Auslösemechanismus, eine Gehäusehälfte weggelassen wurde.

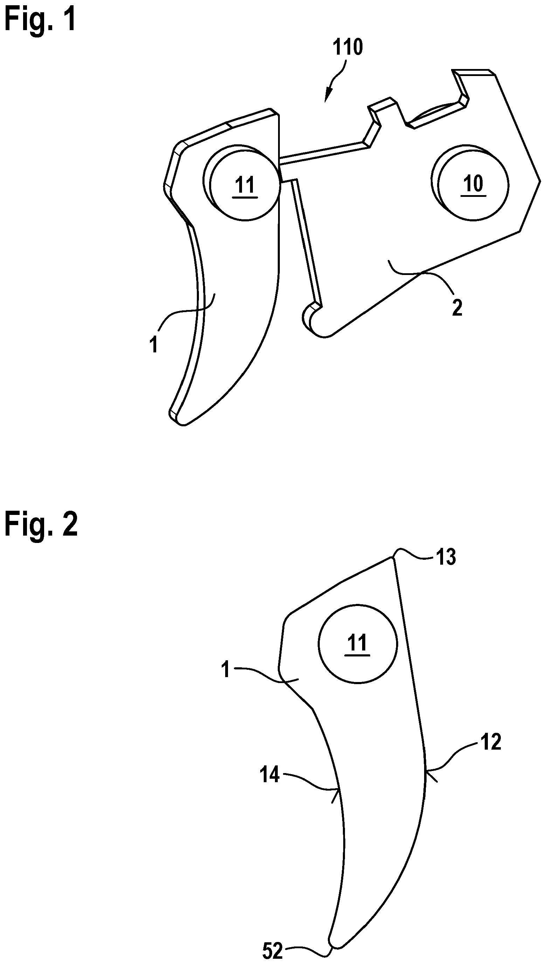

Figur 1 zeigt den Auslösemechanismus 110 bestehend aus dem Abzug 1, der um einen Drehpunkt drehend gelagert ist. Dazu weist der Abzug 1 einen Lagerzapfen 11 auf. Zusätzlich ist der Spannhebel 2, der einen Lagerzapfen 10 aufweist, um den der Spannheben drehend gelagert ist zu erkennen.

Figur 2 zeigt den Abzug 1 in Form eines flächenhaft ausgebildeten Aktivierungsteils. Der Abzug 1 ist an einem Drehpunktradial beweglich gelagert und weist eine erste, teilweise konvex ausgebildete Stirnfläche 12 und eine zweite, teilweise konkav ausgebildete Stirnfläche 14 auf. Der konvexe und der konkav ausgebildete Teil der Stirnflächen 12, 14 sind über einen abgerundeten Bereich 52 miteinander verbunden. Gegenüber diesem abgerundeten Bereich 52 weist der Abzug 1 einen Anschlag in Form einer Ecke 13 auf.

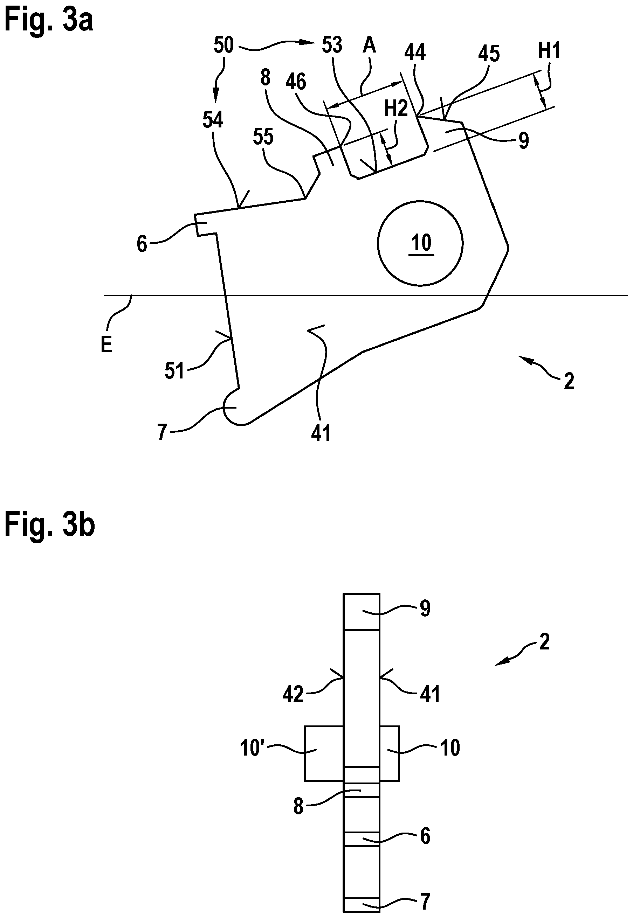

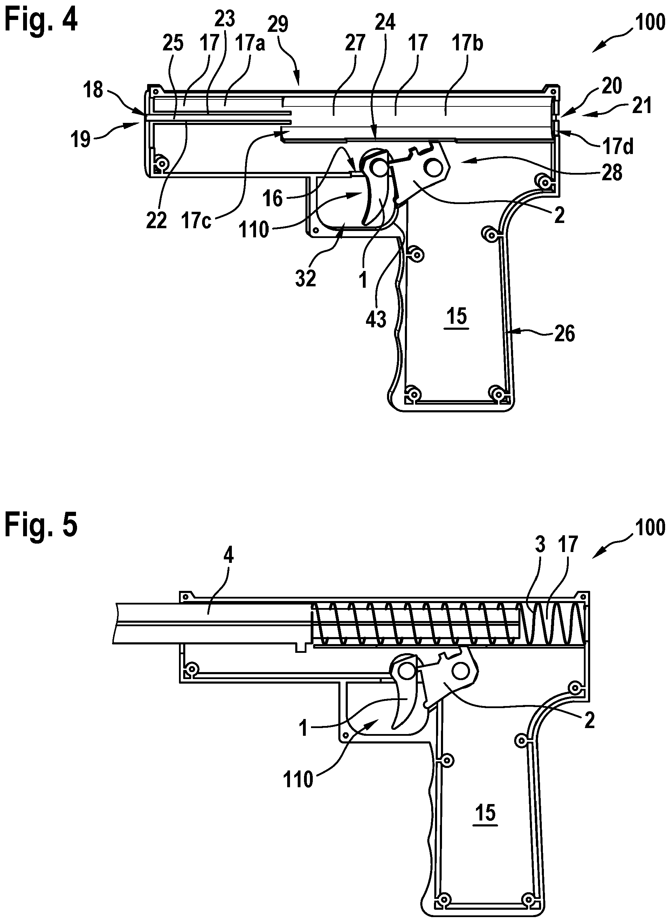

Figur 3a zeigt den Spannhebel 2 in Vorderansicht. Der Spannhebel 2 ist ein flächenhaft ausgebildetes Teil, welches auf beiden Seitenflächen 41, 42 (Figur 3b) einen Lagerzapfen 10 aufweist. Das Lager, in dem die Lagerzapfen 10 aufgenommen werden, sind in dem Gehäuse 15 (Fig 4) angeordnet. Die Lager und die Lagerzapfen 10 und 10' bilden zusammen eine Lagerung, in der der Spannhebel 2 drehbar angeordnet ist. Dadurch ist der Spannhebel 2 drehbar in dem Auslösemechanismus 110 angeordnet. Der flächenhaft ausgebildete Spannhebel 2, der im Wesentlichen einer rechteckigen Form entspricht, umfasst einen ersten Anschlag 9, einen zweiten Anschlag 8 und einen dritten Anschlag 6, sowie einen Nocken 7 auf, deren Funktion im Weiteren beschrieben wird. Der erste Anschlag 9 ist in einem Bereich 53 einer ersten Stirnfläche 50 angeordnet. Der Übergang des ersten Anschlags 9 in den Bereich 53 der Stirnfläche 50 kann durch eine Phase gebildet sein. Der zweite Anschlag 8 ist im selben Bereich 53 an der Stirnfläche 50 in einem Abstand A zum ersten Anschlag 9 angeordnet. Im Ausführungsbeispiel gemäß Figur 3a beträgt der Abstand 7 mm. Der Übergang des zweiten Anschlags 8 in den Bereich 53 der Stirnfläche 50 kann durch eine Phase gebildet sein. Um die erforderliche Stabilität des zweiten Anschlags 8 zu gewährleisten, kann der zweite Anschlag 8 eine zum Bereich 53 der Seitenfläche 50 von 90° abweichende Seitenfläche aufweisen. Die Stirnfläche 50 umfasst zwei Flächenbereiche, einen ersten Bereich 53 und einen zweiten Bereich 54. Beide Bereiche schließen im gezeigten Ausführungsbeispiel an der Stelle 55 einen Winkel von 169° ein und sind somit in einem Winkel zueinander angeordnet. Der Abstand des ersten und des zweiten Anschlags bestimmt den Weg zwischen der zweiten maximal gespannten Stellung und der dritten Aktivierungsstellung und somit den Winkelbereich der Drehung des Spannhebels zwischen diesen beiden Stellungen.

Der dritte Anschlag 6 und der Nocken 7 sind an einer zweiten Stirnfläche 51 des Spannhebels 2 angeordnet. Der dritte Anschlag 6 ist im Eckbereich, in dem der zweite Bereich 54 der ersten Stirnfläche 50 in die zweite Stirnfläche 51 übergeht angeordnet. Der Nocken 7 ist im gegenüberliegendem Eckbereich der zweiten Stirnfläche 51 des Spannhebels 2 angeordnet.

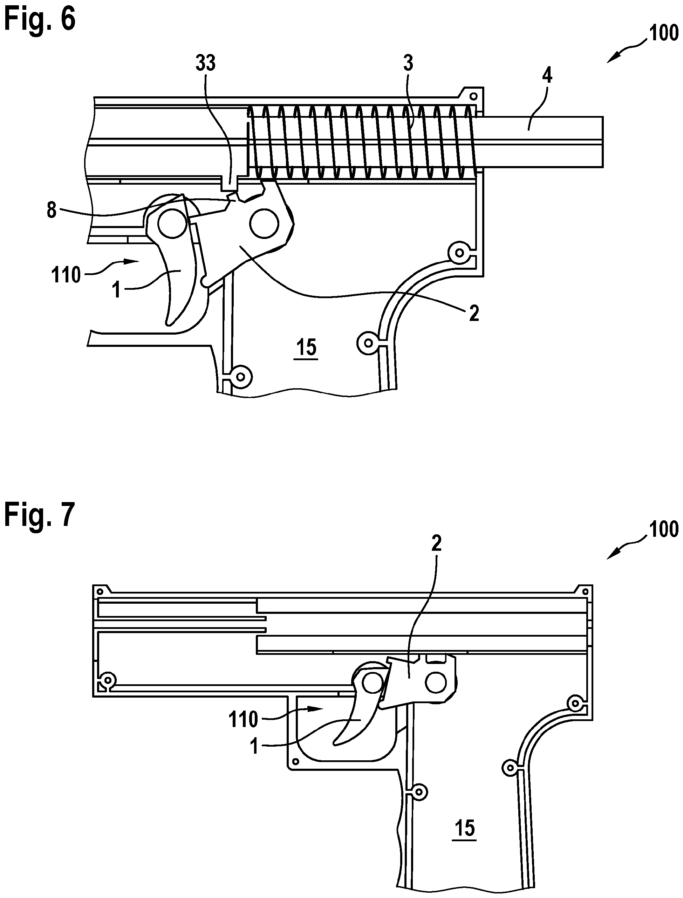

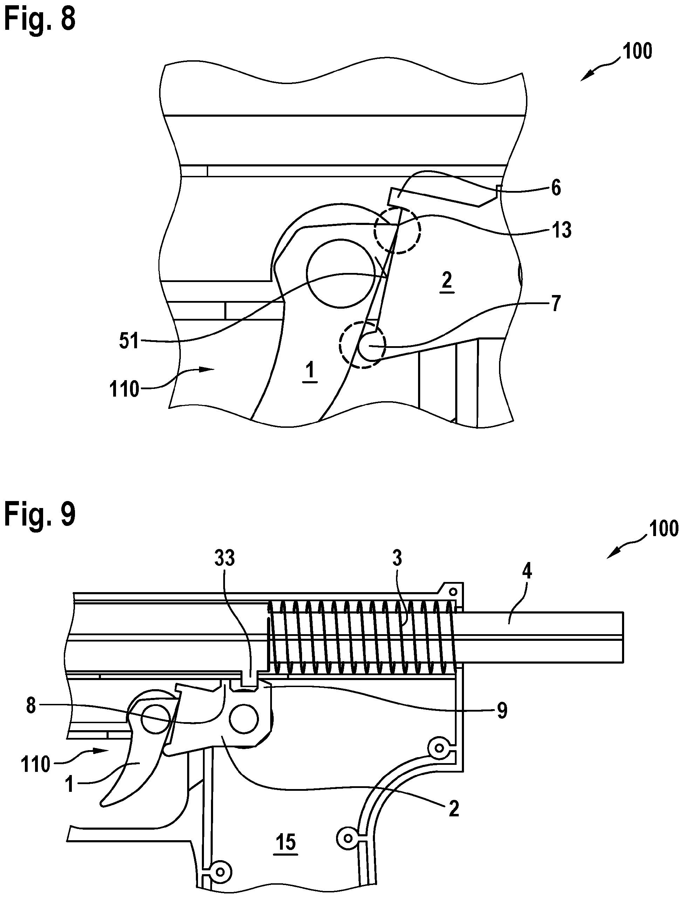

Ausgehend von dem ersten Bereich 53 der Stirnfläche 50 erstreckt sich der erste Anschlag 9 und der zweite Anschlag 8 senkrecht von diesem weg. Dabei ist die Höhe H1 des ersten Anschlags 9, bezogen auf den ersten Bereich 53, geringfügig größer als die Höhe H2 des zweiten Anschlags 8. Im Ausführungsbeispiel gemäß Figur 3a ist die Höhe H1 3,37 mm und die Höhe H2 3,07 mm. Dies bedeutet, die Höhe H1 ist um 0,3 mm größer als die Höhe H1. Der Höhenunterschied der beiden Anschläge in Verbindung mit deren Anordnung ist erforderlich, damit im Spannvorgang des Federelements 3 ein Vorsprung 33 des Bolzens 4 (Figur 6) am zweiten Anschlag 8, ohne diesen zu berühren, vorbeigleiten kann. Im weiteren Verlauf des Spannvorgangs kontaktiert der Vorsprung 33 den Anschlag 9 und initiiert eine Drehung des Spannhebels 2. Diese Drehung bewirkt, dass sich die Position der Ecke 46 von dem zweiten Anschlag 8 verändert. Der Abstand dieser Ecke 46 in Bezug auf eine horizontale Ebene E, die quer beziehungsweise im 90° Winkel zu der Seitenfläche 41 des Spannhebels 2 verläuft, vergrößert sich. Dies bedeutet, dass in der zweiten Stellung des Auslösemechanismus 110, wenn der Spannhebel 2 gedreht ist und das Federelement 3 maximal gespannt ist, sich die Position und somit der Abstand der Ecke 46 des Anschlags 8 relativ zum Vorsprung 33 des Bolzens 4 ändert, der Abstand wird geringer (Figur 9).

Ausgehend von seinem höchsten Punkt 44 weist der erste Anschlag 9 eine geneigte Fläche 45 auf. Diese geneigte Fläche 45 stellt sicher, dass ausgehend vom entspannten Zustand des Auslösemechanismus 110, das Federelement 3 im Spannvorgang am ersten Anschlag 9 ohne Berührung vorbeigleiten kann.

In der zweiten Stellung des Auslösemechanismus 110, wenn der Spannhebel 2 gedreht ist und das Federelement 3 maximal gespannt ist, ändert sich die Position und somit der Abstand der Ecke 46 des Anschlags 8 relativ zum Vorsprung 33 des Bolzens 4, der Abstand wird geringer. (Figur 9).

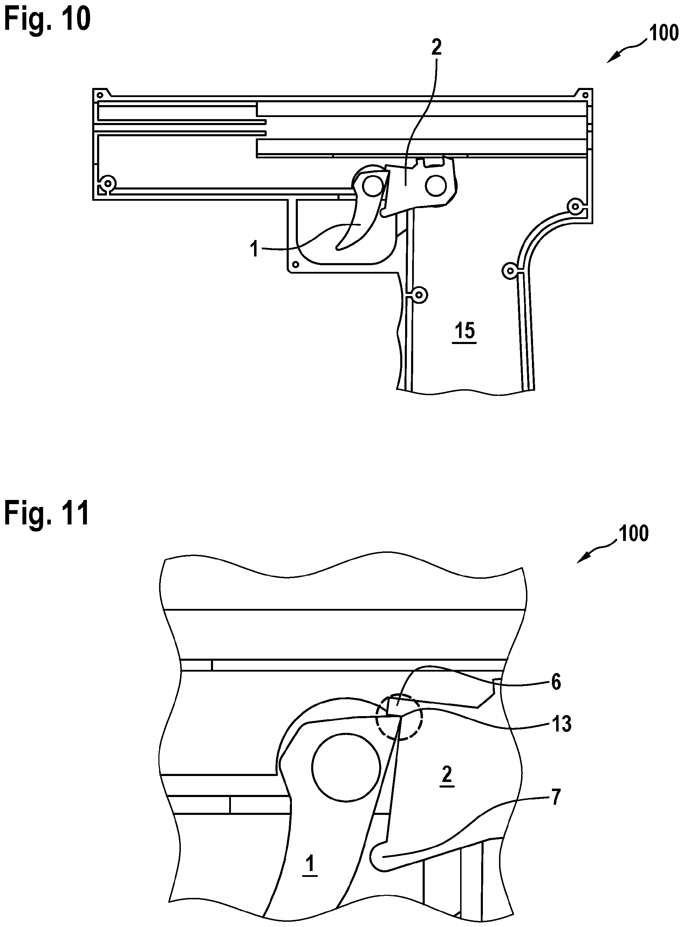

Während des Aktivierungsvorgangs des Auslösemechanismus 110 beziehungsweise im Spannvorgang des Federelements 3, wenn der Vorsprung 33 des Bolzens 4, der durch die erste Öffnung 24 in den ersten Bereich 28 des Gehäuses 15 ragt, durch Berührung des ersten Anschlags 9 des Spannhebels 2 diesen dreht, berührt der Nocken 7 des Spannhebels 2 die Seitenfläche 12 des Abzugs 1, wodurch dieser in derselben Richtung wie der Spannhebel gedreht wird (Figur4). Die Drehung des Spannhebels 2 und des Abzug 1 bewirkt, dass die Ecke 13 des Abzugs 1 in den Bereich nahe der zweiten Stirnfläche 51 unterhalb des dritten Anschlags 6 des Spannhebels 2 überführt wird (Figur 7 und 8). In einer bestimmten Ausführungsform kann in der dritten Position die Ecke 13 des Abzugs 1 die zweite Seitenfläche 51 des Spannhebels 2 berühren. Im weiteren Verlauf, wenn der Auslösemechanismus von der zweiten Stellung in die Aktivierungsstellung überführt wird, dabei sich der Spannhebel 2 in einem Winkel von 15° bis 25°, vorzugsweise 19,4° dreht, hintergreift die Ecke 13 des Abzugs 1 den dritten Anschlag 6 des Spannhebels 2 und hält den Auslösemechanismus 110 in der Aktivierungsstellung (Figur 10 und 11).

Der Spannhebel 2 und der Abzug 1 drehen sich in der gleichen Richtung, wobei die Drehrichtung von der zweiten Position in die dritte Position entgegen der Drehrichtung von der ersten Position in die zweite Position erfolgt.

Figur 3b zeigt eine Seitenansicht des Spannhebels 2 gemäß Figur 3a Ersichtlich sind der Lagerzapfen 10, der sich von der Seitenfläche 41 weg erstreckt und der Lagerzapfen 10', der sich von der Seitenfläche 42 weg erstreckt. Zusätzlich sind der erste Anschlag 9, der zweite Anschlag 8 und der dritte Anschlag 6 sowie der Nocken 7 in Draufsicht erkennbar.

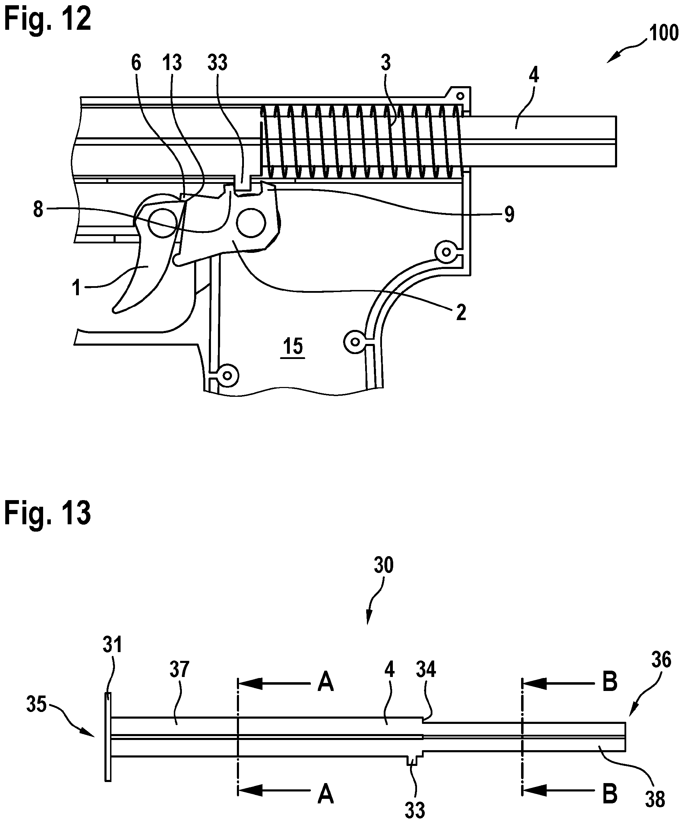

Bewegt sich der Bolzen 4 von der äußersten Position, in der das Federelement 3 komplett gespannt ist, in die Aktivierungsposition (Figur 12), stößt der Vorsprung 33 am zweiten Anschlag 8 des Spannhebels 2 an. Da der Spannhebel 2 durch das Hintergreifen der Ecke 13 des Abzugs 1 am dritten Anschlag 6 des Spannhebels 2 ortsfest gehalten ist, wird der Auslösemechanismus 110 im gespannten Zustand fixiert (Figur 12). Der Abzug 1 befindet sich in der Aktivierungsstellung.

Wird der Abzug 1 ausgehend von der Aktivierungsstellung betätigt, dreht er sich, wobei die Freigabe des Auslösemechanismus 110 erfolgt, und das Geschoß 30 durch das gespannte Federelement 3 beschleunigt und abgeschossen wird.

In Figur 4 ist das Gehäuse 15 einer Vorrichtung 100 gezeigt. Dabei wurden zur besseren Darstellung des im Gehäuse 15 angeordneten Auslösemechanismus 110 und dessen Teile, der Abzug 1 und der Spannhebel 2, eine Gehäusehälfte weggelassen. Die gezeigte Gehäusehälfte 26 ist in ihrer Außenform identisch mit der weggelassenen Gehäusehälfte. Das Gehäuse 15 umfasst einen ersten Bereich 28, in dem der Auslösemechanismus 110 angeordnet ist. In einem zweiten Bereich 29 ist ein Lauf 27 angeordnet. Der erste Bereich 28 und der zweite Bereich 29 sind mittels einer Öffnung 24 verbunden. Der Lauf 27 der Vorrichtung 100 umfasst einen Führungsabschnitt 17. Dieser Führungsabschnitt 17 weist einen ersten Bereich 17a und einen zweiten Bereich 17b auf. Im ersten Bereich 17a kann der Bolzen eines Geschosses (nicht dargestellt) und im zweiten Bereich 17b das Federelement (nicht dargestellt) angeordnet sein. Der zweite Bereich 17b ist am ersten Ende 17c durch eine Innenwand und am zweiten Ende 17d durch eine Außenwand des Gehäuses 15 begrenzt. Die Länge des zweiten Bereichs 17b entspricht im Wesentlichen der Länge eines entspannten Federelements. Der Führungsabschnitt 17 weist an seinem ersten Ende 18 eine erste Öffnung 19 auf. In diese Öffnung kann ein Bolzen 4 (Figur 5) eines Geschosses eingeführt werden. An seinem zweiten Ende 20 weist der Führungsabschnitt 17 eine zweite Öffnung 21 auf. Durch diese zweite Öffnung 21 reicht der Bolzen 4 des Schafts eines Geschosses, wenn sich der Auslösemechanismus 110 in der zweiten (maximal gespannten Stelle) beziehungsweise in der Aktivierungsstellung befindet (Figur 9). Zusätzlich sind ausgehend vom ersten Bereich 18 Führungsmittel in Form einer Wand 22 und 23 zu erkennen. Die beiden Wände 22 und 23 sind beabstandet zueinander angeordnet und bilden dazwischen einen Kanal 25. Desweitern ist der Aktivierungsbereich 32 ersichtlich, der ein Formmittel 43 aufweist, welches im Wesentlichen der konvexen Stirnfläche 12 des Abzugs 2 entspricht und einen Anschlag für den Spannhebel 2 bildet.

Figur 5 zeigt eine Vorrichtung 100 mit Federelement 3 und einen Teilbereich des Bolzens 4 des Geschosses. Das Federelement 3 in Form einer Zylinderfeder ist im entspannten Zustand dargestellt. Der Abzug 1 und der Spannhebel 2 sind im Gehäuse 15 drehbar gelagert und in Figur 5 im entspannten Zustand des Auslösemechanismus 110 gezeigt. Die Vorrichtung 100 ist in ihrer entspannten Ausgangsposition dargestellt, in der das Geschoss mit seinem Bolzen 4 in den Führungsabschnitt 17 eingeführt ist und am Federelement 3 spannungsfrei anliegt.

Figur 6 zeigt die Vorrichtung 100 während des Aktivierungsvorgangs des Auslösemechanismus, des Spannvorgangs an der Position, an der der Vorsprung 33 des Bolzens 4 über den zweiten Anschlag 8 des Spannhebels 2 gleitet.

Die Figuren 7 (ohne Federelement 3 und Bolzen 4), 8 und 9 zeigen jeweils die Vorrichtung 100 in der maximal gespannten Stellung des Auslösemechanismus 110, in dem das Federelement 3 maximal gespannt ist. Aus Figur 8 ist ersichtlich, dass der Spannhebel 2, durch dessen Drehung und den dadurch ausgelösten Kontakt zwischen dem Nocken 7 des Spannhebels 2 mit der Seitenfläche 12 des Abzugs 1 den Abzug 1 soweit gedreht hat, dass die Ecke 13 des Abzugs 1 in den Bereich nahe der zweiten Stirnfläche 51 unterhalb des dritten Anschlags 6 des Spannhebels 2 überführt wird.

Die Figuren 10 (ohne Federelement 3 und Bolzen 4), 11 und 12 zeigen jeweils die Vorrichtung 100 in der Aktivierungsstellung des Auslösemechanismus 110, in der das Geschoss abschussbereit ist. Dieser Zustand wird erreicht, indem der Spannvorgang des Federelements 3 beendet ist. Dabei tendiert das gespannte Federelement 3 das Geschoss zu beschleunigen. Der Bolzen 4 des Geschosses bewegt sich entgegen der Spannrichtung bis der Vorsprung 33 an dem zweiten Anschlag 8 des Spannhebels 2 anschlägt (Figur 12). Da der Spannhebel 2 durch den Abzug 1 wie oben beschrieben blockiert ist - die Ecke 13 des Abzugs 1 hintergreift den dritten Anschlag 6 des Spannhebels 2 - verharrt der Auslösemechanismus 110 im gespannten Zustand. Die mögliche Bewegung des Bolzens 4 zwischen der Position, in der das Federelement 3 maximal gespannt ist und der Aktivierungsstellung wird durch den Abstand A (Figur 3a) minus der Breite des Vorsprungs 33 bestimmt.

Figur 13 zeigt das Geschoss 30. Dieses weist einen in Längsrichtung ausgebildeten Bolzen 4 in Form eines Stabes auf, an dem an seinem ersten Ende 35 ein flächenhaft ausgebildetes Element 31 angeordnet ist. Das flächenhaft ausgebildete Element 31 kann eine flexible Kunststoffplatte sein. Diese Kunststoffplatte kann eine nachgiebige Beschichtung beispielsweise in Form eines Vlieses oder Schwamms aufweisen. Der Bolzen 4 kann in zwei Bereiche 37 und 38 unterteilt sein. Dabei erstreckt sich ein erster Bereich 37 vom ersten Ende 35 in Richtung des zweiten Endes 36 bis zum Absatz 34. Der zweite Bereich 38 erstreckt sich vom Absatz 34 bis zum zweiten Ende 36. Beide Bereiche 37, 38 können unterschiedliche Abmessungen aufweisen. Dadurch wird der Absatz 34 zwischen den Bereichen 37 und 38 gebildet. Die Abmessungen des zweiten Bereichs 38 ist vorzugsweise geringfügig geringer als der Innendurchmesser des Federelements 3. Die Abmessungen des ersten Bereichs 37 entspricht dem Außendurchmesser des Federelements 3 oder kann auch größer ausgebildet sein. Der zwischen den beiden Bereichen gebildete Absatz 34 dient zur Anlage an das Federmittel 3, um dieses zu spannen. Im Bereich des Absatzes 34 ist ein Vorsprung 33 ausgebildet. Mittels diesem Vorsprung 33, der im Aktivierungsprozess des Auslösemechanismus 110, des Spannprozess des Federelements 3 den Spannhebel 2 aktiviert wird infolgedessen Drehung der Abzug 1 des Auslösemechanismus 110 in seine Aktivstellung überführt.

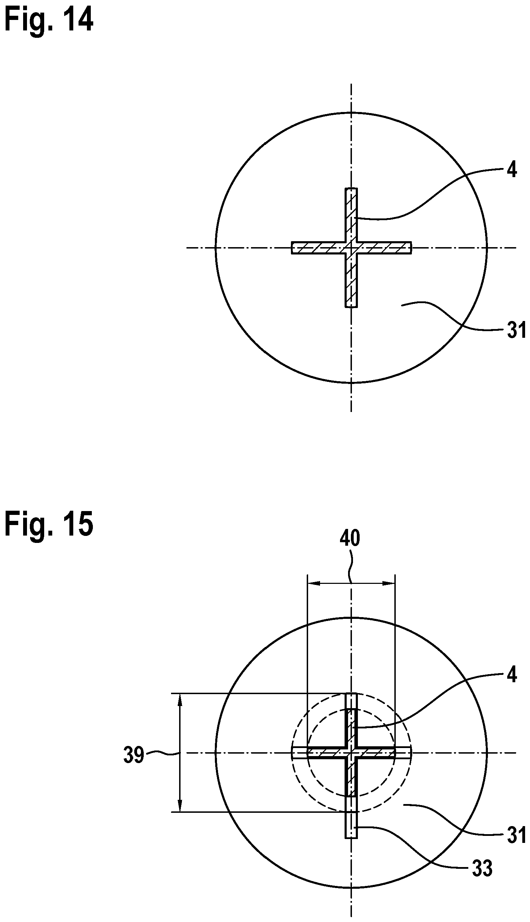

Figur 14 zeigt einen Querschnitt durch den Bereich 37 an der Linie A-A aus Figur 13. Daraus ist das Profil des Bolzens 4 und die Rückseite des Elements 31 ersichtlich.

Figur 15 zeigt einen Querschnitt durch den Bereich 38 an der Linie B-B aus Figur 13. Daraus ist ersichtlich, dass die Höhe 40 des Querschnitts des Bereichs 38 geringer ist als der Höhe 39 des Querschnitts 37.

Das Ausführungsbeispiel gemäß den Figuren 14 und 15 zeigen sternförmige Profilquerschnitte des Bolzens 4 des Geschosses 30. Andere Ausführungsbeispiele können abhängig von der Anwendung und vom Fertigungsverfahren andere z.B. zylinderförmige, polygonhafte oder sonstige Querschnittsformen aufweisen.

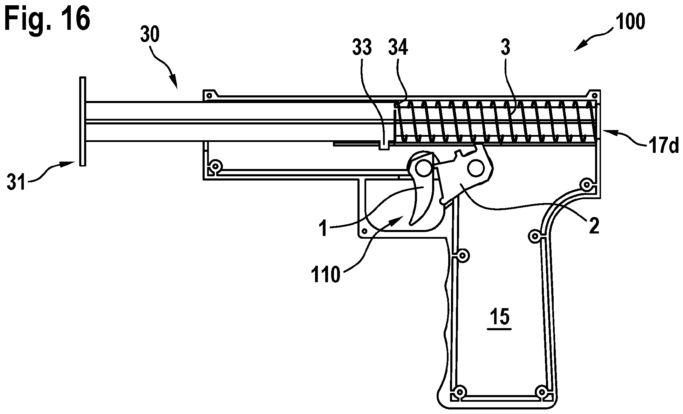

Figur 16 zeigt eine Vorrichtung 100, wobei zur besseren Ansicht die zweite Halbschale nicht gezeigt ist. Es ist das Geschoss 30 mit einem flächenhaft ausgebildeten Element 31, das Federelement 3, der Auslösemechanismus 110 mit dem Abzug 1, dem Spannhebel 2 sowie eine Hälfte des Gehäuses 15 zu erkennen. Die Vorrichtung 100 und der Auslösemechanismus 110 ist in einer ersten Stellung im entspannten Zustand abgebildet, bevor der Spannprozess des Federelements 3 beginnt. Das Geschoss 30 ist in den Führungsabschnitt 17 soweit eingeführt, dass der Absatz 34 das Federelement 3 berührt und bereits teilweise spannt. Der Spannvorgang des Federelements 3 hat bereits begonnen. Der Abzug 1 und der Spannhebel 2 befinden sich noch in entspannter Position, in Ruheposition und ermöglichen das weitere Spannen des Federelements 3 durch den Absatz 34 des Stabs 4 des Geschosses 30. Zum Spannen wird das Geschoss 30 weiter in Richtung zweites Ende 17d des Führungsabschnitts 17 des Grundkörpers 15 geschoben.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

Erfindungsgemäß ist eine Vorrichtung 100 angegeben, die ein Gehäuse 15 aufweist mit einem ersten Bereich 28, indem ein Auslösemechanismus 110 mit einem Abzug 1 und einem Spannhebel 2 drehend gelagert ist, mit einem zweiten Bereich 29, in dem ein Geschoss 30 und ein Federelement 3 in einem Lauf 27 längsbeweglich angeordnet sind, wobei durch das Einführen des Geschosses 30 das Federelement 3 gespannt und der Auslösemechanismus 110 aktiviert und durch das Betätigen des im aktivierten Zustand befindlichen Abzugs 1 der Auslösemechanismus 110 freigegeben wird, wodurch sich das Federelement 3 entspannt und dadurch das Geschoss 30 beschleunigt und abgeschossen wird.

| **Bezugszeichenliste** | |
|---|---|
| 100 | Vorrichtung |
| 110 | Auslösemechanismus |
| 1 | Abzug |
| 2 | Spannhebel |
| 3 | Federelement |
| 4 | Stange, Bolzen |
| 6 | dritter Anschlag von 2 |
| 7 | Nocken |
| 8 | zweiter Anschlag von 2 |
| 9 | erster Anschlag von 2 |
| 10, 10' | Lagerzapfen von 2 |
| 11 | Drehpunkt von 1 |
| 12 | konvexe Stirnfläche von 1 |
| 13 | Ecke von 1 |
| 14 | konkave Stirnfläche von 1 |
| 15 | Gehäuse |
| 16 | Zweite Öffnung |
| 17 | Führungsabschnitt |
| 17a | erster Abschnitt von 17 |
| 17b | zweiter Bereich von 17 |
| 17c | erstes Ende von 17b |
| 17d | zweites Ende von 17b |
| 18 | erstes Ende von 17 |
| 19 | erste Öffnung von 17 |
| 20 | zweites Ende von 17 |
| 21 | zweite Öffnung von 17 |
| 22 | Wand |
| 23 | Wand |
| 24 | erste Öffnung |
| 25 | Kanal |
| 26 | Gehäusehälfte von 15 |
| 27 | Lauf |
| 28 | Erster Bereich von 15 |
| 29 | Zweiter Bereich von 15 |
| 30 | Geschoss |
| 31 | Element von 30 |
| 32 | Aktivierungsbereich |
| 33 | Vorsprung von 4 |
| 34 | Absatz von 30 |
| 35 | erstes Ende von 30 |
| 36 | zweites Ende von 30 |
| 37 | erster Bereich von 4 |
| 38 | zweiter Bereich von 4 |
| 39 | Durchmesser von 37 |
| 40 | Durchmesser von 38 |
| 41 | Seitenfläche von 2 |
| 42 | Seitenfläche von 2 |
| 43 | Formmittel |
| 44 | höchster Punkt von 9 |
| 45 | geneigte Fläche von 9 |
| 46 | Ecke von 8 |
| 50 | Erste Stirnfläche von 2 |
| 51 | Zweite Stirnfläche von2 |
| 52 | Abgerundeter Bereich von 1 |
| 53 | Erster Bereich von 50 |
| 54 | Zweiter Bereich von 50 |
| 55 | Stelle |
| H1 | Höhe von 9 |
| | |
| | |
| H4 | Höhe von 46 in Bezug auf M |
| A | Abstand |
| E | Ebene |

## Patentansprüche

1. Ein erfindungsgemäßer Auslösemechanismus (110) umfasst
- einen flächenhaft ausgebildeten drehend gelagerten Abzug (1), der eine konvex ausgebildete Stirnfläche (12) und eine konkav ausgebildete Stirnfläche (14) aufweist, die über einen gerundeten Bereich (52) miteinander verbunden sind und gegenüber dem gerundeten Bereich (52) eine Ecke (13) aufweist, und
- einen flächenhaft ausgebildeten Spannhebel (2), der im Wesentlichen eine rechteckige Form aufweist, und an einem Drehpunkt radial beweglich gelagert ist, wobei der Spannhebel (2) einen ersten Anschlag (9), einen zweiten Anschlag (8) und einen dritten Anschlag (6), sowie einen Nocken (7) aufweist,
**dadurch gekennzeichnet,**
**dass** in der Aktivierungsstellung des Auslösemechanismus die Ecke (13) den dritten Anschlag hintergreift.

2. Auslösevorrichtung (110) gemäß Anspruch 1, **dadurch gekennzeichnet, dass** der erste Anschlag 9 und der zweite Anschlag 8 an einem ersten Bereich (53) einer ersten Stirnfläche (50) des Spannhebels (2) im Abstand (A) zueinander angeordnet sind.

3. Auslösevorrichtung (110) gemäß Anspruch 1 oder 2, **dadurch gekennzeichnet, dass** der zweite Anschlag (8) eine Ecke 46 aufweist, die in einem Abstand zu einer quer zu einer Seitenfläche (41, 42) horizontalen Ebene (E) angeordnet ist, wobei sich dieser Abstand vergrößert, wenn der Auslösemechanismus von der ersten entspannten Stelle in die zweite maximal gespannte Stelle überführt wird.

4. Auslösevorrichtung (110) gemäß Anspruch 1, **dadurch gekennzeichnet, dass** der Nocken (7) des Spannhebels (2) in Wirkverbindung mit der Stirnfläche (12) ist, wenn der Auslösemechanismus von der ersten entspannten Stelle in die zweite maximal gespannte Stelle überführt wird.

5. Auslösevorrichtung (110) gemäß Anspruch 1, **dadurch gekennzeichnet, dass** sich der Abzug (1) und der Spannhebel (2) immer in dieselbe Richtung drehen und dies unabhängig von der Überführung des Auslösemechanismus von der ersten Stellung in die zweite Stellung oder von der zweiten Stellung in die dritte Stellung oder von der dritten Stellung in die erste Stellung.

6. Vorrichtung (100) mit
- einem Gehäuse (15) einem ersten Bereich (28) und einem zweiten Bereich (29), wobei im ersten Bereich (28) ein Auslösemechanismus (110), in dem ein Abzug (1) und ein Spannhebel (2) angeordnet sind, und der zweite Bereich (29) einen Lauf (27) umfasst, in dem ein Federelement (3) und ein Geschoss (30) mit einem Bolzen (4) der einen Vorsprung (33) aufweist, längsbeweglich angeordnet sind,
**dadurch gekennzeichnet,**
**dass** durch Einführen des Geschosses (30) in den Lauf (27) das Federelement (3) gespannt wird.

7. Vorrichtung (100) nach Anspruch 6 **dadurch gekennzeichnet, dass** der Vorsprung (33) des Bolzens (4) des Geschosses (30) durch eine erste Öffnung (24), die den ersten Bereich (28) mit dem zweiten Bereich (29) verbindet greift und im Spannprozess des Federelements (3) den Auslösemechanismus (110) aktiviert.

8. Vorrichtung (100) nach Anspruch 6 **dadurch gekennzeichnet, dass** der Spannhebel (2) einen ersten Anschlag (9) aufweist, der im Spannprozess des Federelements (3) mit dem Vorsprung (33) des Bolzens (4) des Geschosses (30) in Wirkverbindung steht, wodurch der Spannhebel (2) gedreht wird.

9. Vorrichtung (100) nach Anspruch 6 **dadurch gekennzeichnet, dass** der Spannhebel (2) einen Nocken (7) aufweist, der im Spannprozess in Wirkverbindung mit der Seitenfläche (12) des Abzugs (1) steht, wodurch der Abzug (1) gedreht und in seine Aktivierungsposition überführt wird.

10. Vorrichtung (100) nach Anspruch 6 **dadurch gekennzeichnet, dass** der Spannhebel (2) einen zweiten Anschlag (8) aufweist, der in Aktivierungsstellung des Auslösemechanismus (110) mit dem Vorsprung (33) des Bolzens (4) des Geschosses (30) in Wirkverbindung steht.

11. Vorrichtung (100) nach Anspruch 6 **dadurch gekennzeichnet, dass** der Spannhebel (2) einen dritten Anschlag (6) aufweist, der in Aktivierungsstellung des Auslösemechanismus (110) durch eine Ecke (13) des Abzugs (1) hintergriffen und dadurch fixiert wird.

12. Vorrichtung (100) nach Anspruch 10 **dadurch gekennzeichnet, dass** der zweite Anschlag (8) des Spannhebels 2 eine Ecke 46 aufweist, deren Abstand sich zum Vorsprung (33) des Bolzens (4) im Spannprozess des Federelements (3) verringert.

13. Vorrichtung (100) nach Anspruch 6 **dadurch gekennzeichnet, dass** der Abzug (1) durch eine zweite Öffnung (16) des Gehäuses (15) in einen Aktivierungsbereich (32) reicht.

14. Vorrichtung (100) nach Anspruch 12 **dadurch gekennzeichnet, dass** der Aktivierungsbereich (32) ein Formmittel umfasst, dessen Form kongruent zum konvexen Bereich der Seitenfläche (12) des Abzugs (1) ausgebildet ist.

15. Vorrichtung gemäß Anspruch 6, **dadurch gekennzeichnet, dass** sich der Abzug (1) und der Spannhebel (2) des Auslösemechanismus (110) immer in dieselbe Richtung drehen und dies unabhängig von der Überführung des Auslösemechanismus (110) von der ersten Stellung in die zweite Stellung oder von der zweiten Stellung in die dritte Stellung oder von der dritten Stellung in die erste Stellung.

16. Verfahren zur Aktivierung einer Vorrichtung (100), bei dem ein Geschosses (30) in den Lauf (25) der Vorrichtung (100) eingeführt wird, dabei ein Absatz (34) des Bolzens (4) des Geschosses (30) ein Federelement (3) spannt und zugleich ein Vorsprung (33) des Bolzens (4) des Geschosses (30) durch eine Öffnung (24) im Gehäuse (15) greift, wobei der Vorsprung (33) mit einen Spannhebel (2) in Wirkverbindung steht, wodurch der Spannhebel (2) sich um eine Lagerung (10, 10') dreht und wobei der Spannhebel (2) mit dem Abzug (1) in Wirkverbindung steht, wodurch der Abzug (1) sich um eine Lagerung (11) dreht und in eine Aktivierungsposition überführt wird..

17. Verfahren nach den Anspruch 16 **dadurch gekennzeichnet, dass** durch Betätigung des Abzugs (1) der fixierte Auslösemechanismus (110) gelöst wird und dadurch das Geschoss (30) durch das gespannte Federelement (3) beschleunigt und abgeschossen wird.
